# EUROPÄISCHE PATENTSCHRIFT

(11) **EP 1 425 526 B1**
(45) Veröffentlichungstag und Bekanntmachung des Hinweises auf die Patenterteilung: **26.07.2006**
(21) Anmeldenummer: 02758079.4
(22) Anmeldetag: 06.07.2002
(51) Int. Cl.: F16K 1/00

(54) **VENTIL ZUM STEUERN VON FLÜSSIGKEITEN**
LIQUID CONTROL VALVE
SOUPAPE POUR REGULER LE DEBIT DE LIQUIDES

(30) Priorität: 25.07.2001 DE 10136186
(43) Veröffentlichungstag der Anmeldung: 09.06.2004
(73) Patentinhaber: ROBERT BOSCH GMBH, 70442 Stuttgart (DE)
(72) Erfinder: STOECKLEIN, Wolfgang, 70176 Stuttgart (DE); SCHMIEDER, Dietmar, 71706 Markgroeningen (DE)
(86) Internationale Anmeldenummer: PCT/DE2002/002486
(87) Internationale Veröffentlichungsnummer: WO 2003/012322

(56) Entgegenhaltungen:
- EP-A- 1 026 393
- DE-A- 10 037 527
- DE-A- 10 064 790
- DE-A- 19 803 842
- DE-A- 19 946 732
- DE-A- 19 946 833
- DE-C- 19 946 827

## Beschreibung

### Stand der Technik

Die Erfindung betrifft ein Ventil zum Steuern von Flüssigkeiten mit einer insbesondere piezoelektrischen Aktor-Einheit zur Betätigung einer Ventilglied-Anordnung nach der im Oberbegriff des Patentanspruches 1 näher bezeichneten Art.

Ein Ventil zum Steuern von Flüssigkeiten mit einer piezoelektrischen Aktor-Einheit zur Betätigung eines Ventilgliedes ist aus der DE 199 46 883 A1 bekannt. Bei diesem Ventil ist in einer Bohrung eines Ventilkörpers das Ventilglied axial verschiebbar angeordnet und weist an einem Ende ein Ventilschließglied auf, das mit wenigstens einem an dem Ventilkörper vorgesehenen Sitz zum Öffnen und Schließen des Ventiles zusammenwirkt. Das Ventilschließglied trennt dabei einen Niederdruckbereich von einem Hochdruckbereich des Ventiles, wobei der Hochdruckbereich beispielsweise einen Rail-Druckbereich in einem Common-Rail-Einspritzventil eines Kraftfahrzeuges darstellt.

Das Ventilglied besteht aus einem ersten und einem zweiten Kolben, zwischen welchen eine als hydraulische Übersetzung arbeitende Hydraulikkammer angeordnet ist, die die Kolben gemeinsam mit dem Ventilkörper begrenzen. Derartige hydraulische Übersetzungen sind in Common-Rail-Einspritzventilen zur Stellwegvergrößerung einer piezoelektrischen Aktor-Einheit und für einen durch Temperaturunterschiede bedingten Längenausgleich vorgesehen.

Bei der Betätigung der beiden Kolben durch die piezoelektrische Aktor-Einheit wird die hydraulische Übersetzung bzw. der hydraulische Koppler mit einem hohen Druck bzw. einer hohen Stellkraft beaufschlagt, die dazu führt, daß in dem hydraulischen Koppler vorhandene Hydraulikflüssigkeit bzw. Kraftstoff zwischen den Kolben und dem Ventilkörper austritt, womit das Volumen des hydraulischen Kopplers stetig abnimmt.

Aus diesem Grund muß der hydraulische Übersetzer zwischen den einzelnen Ansteuerungen des Ventiles wieder befüllt werden, um Ungenauigkeiten bei nachfolgenden Ventilbetätigungen zu vermeiden.

Eine derartige Wiederbefüllung eines hydraulischen Kopplers ist in der DE 199 46 833 A1 beschrieben, wobei eine Befülleinrichtung zur Entnahme von Hydraulikflüssigkeit aus einem Hochdruckbereich des Ventiles vorgesehen ist. Die Befülleinrichtung ist mit einem eine Drosselbohrung aufweisenden Kanal ausgebildet, der zur Wiederbefüllung des hydraulischen Kopplers in einen den ersten Kolben und/oder den zweiten Kolben umgebenden Spalt mündet und über ein Überdruckventil eine Abzweigung zu einem Ventilniederdruckraum aufweist. Der Ventilniederdruckraum grenzt an einen durch das Ventilschließglied verschließbaren Ventilsitz. Die Ventilausgestaltung mit einer solchen Befülleinrichtung ist jedoch relativ aufwendig und kostenintensiv.

Zur Vermeidung der vorgenannten Nachteile wurde in nachfolgenden Entwicklungen dazu übergegangen, den gesamten Ventilbereich ausgehend von dem hydraulischen Koppler bis zu dem ventilsitz des Ventilschließgliedes als Systemdruck auszubilden, wobei eine Wiederbefüllung des hydraulischen Kopplers gleichzeitig mit dem Öffnen des Ventilschließgliedes stattfindet.

Damit zwischen den einzelnen Einspritzungen eine ausreichende Befüllung des hydraulischen Kopplers gewährleistet wird und Mengenstreuungen zwischen den verschiedenen Injektoren eines Motors eines Kraftfahrzeuges gering bleiben, sollte der Systemdruck bei allen Injektoren möglichst gleich hoch sein. Für eine exakte Funktionsweise der Ventile ist es von Vorteil, wenn im gesamten Niederdruckbereich der Ventile Systemdruck vorliegt und zwischen den Einspritzungen weder Leck- noch Absteuervolumenströme des Hydraulikmittels vorliegen.

Zur Befüllung des hydraulischen Kopplers müssen die beiden Kolben gegen den an diesen anliegenden Systemdruck auseinandergezogen werden, so daß die Hydraulikflüssigkeit in den Kopplerraum einströmt und der hydraulische Übersetzer befüllt wird.

Bei der konstruktiven Umsetzung des Ventiles kann für eine ausreichend schnelle Befüllung der zweite Kolben durch eine Feder mit geringer Vorspannung vorgespannt werden, womit der an dem zweiten Kolben angreifende Systemdruck überwunden wird und der zweite Kolben stets in Anlage an dem Ventilschließglied gehalten wird.

Nachdem jedoch bereits bekanntermaßen eine Feder zur Vorspannung der piezoelektrischen Aktor-Einheit erforderlich ist, muß hiermit eine weitere Feder des Ventiles abgestimmt werden. Neben diesem Abstimmaufwand ist zudem der zur Verfügung stehende geringe Bauraum problematisch, da eine schnell, gleich und leicht reagierende Feder eine entsprechend große Baulänge erfordert.

Zudem ist die Realisierung exakt dosierter Mehrfacheinspritzungen schwierig, da der federbelastete zweite Kolben bei Mehrfacheinspritzungen unter Umständen stark durchschwingen kann, womit sich entsprechend große Mengentoleranzen ergeben.

### Vorteile der Erfindung

Das Ventil nach der Erfindung mit den Merkmalen des Anspruchs 1, stellt eine Optimierung der hydraulischen Kopplerfunktion der Hydraulikkammer hinsichtlich der Wiederbefüllung dar, wobei in vorteilhafter Weise auf eine im Stand der Technik auf den zweiten Kolben einwirkende Feder verzichtet werden kann.

Die Befüllung der Hydraulikkammer bei dem erfindungsgemäßen Ventil erfolgt nur über den ersten Kolben aus dem Systemdruckbereich, da lediglich das der piezoelektrischen Aktor-Einheit zugewandte Ende des ersten Kolbens in dem Systemdruckbereich angeordnet ist, wohingegen das dem Ventilschließglied zugeordnete Ende des zweiten Kolbens in dem Bereich mit kleinerem Druck als der Systemdruck angeordnet ist. Damit wird mit zunehmender Befüllung der Hydraulikkammer der zweite Kolben zusammen mit dem Zwischenkolben in Richtung des Ventilschließgliedes verschoben und kommt dort schließlich bei optimaler Befüllung der Hydraulikkammer an diesem zur Anlage, womit eine verzögerungsfreie Einspritzung bei einer erneuten Ansteuerung des Ventiles gewährleistet ist.

Die Verschiebung des zweiten Kolbens in Verbindung mit dem Zwischenkolben ist in vorteilhafter Weise dadurch gewährleistet, daß der Zwischenkolben mit einem kleineren Durchmesser als der zweite Kolben ausgebildet ist. An dem zweiten Kolben greift eine dem Durchmesserverhältnis zwischen dem zweiten Kolben und dem Zwischenkolben entsprechend größere Stellkraft als an dem Zwischenkolben an, so daß der zweite Kolben in Richtung des Ventilschließgliedes ohne zusätzliche Federkraft verschoben wird.

Der Zwischenkolben, das Durchmesserverhältnis zwischen dem zweiten Kolben und dem Zwischenkolben sowie die Anordnung der Stirnflächen des zweiten Kolbens und des Zwischenkolbens in verschiedenen Druckbereichen gewährleisten auf einfache Art und Weise eine schnelle Befüllung des hydraulischen Kopplers.

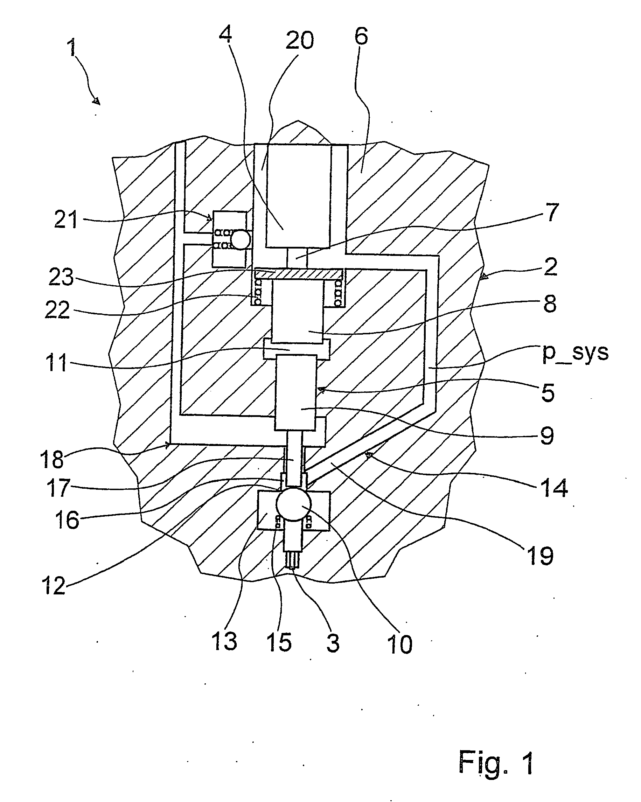

Weitere Vorteile und vorteilhafte Ausgestaltungen des Gegenstandes nach der Erfindung sind der Beschreibung, der Zeichnung und den Patentansprüchen entnehmbar.

### Zeichnung

In der einzigen Figur der Zeichnung ist stark schematisiert ein Ausführungsbeispiel eines Ventiles zum Steuern von Flüssigkeiten dargestellt, dessen Aufbau und Funktionsweise in der nachfolgenden Beschreibung näher erläutert wird.

Die Figur zeigt dabei einen Ausschnitt eines Kraftstoffeinspritzventils mit einer Ansteuereinheit.

### Beschreibung des Ausführungsbeispiels

Bezug nehmend auf die Figur ist ausschnittsweise und schematisch stark vereinfacht ein Kraftstoffeinspritzventil 1 zum Einbau in eine nicht näher dargestellte Brennkraftmaschine eines Kraftfahrzeuges gezeigt, das vorliegend als Common-Rail-Injektor zur Einspritzung von vorzugsweise Dieselkraftstoff ausgebildet ist.

Das Kraftstoffeinspritzventil 1 umfaßt als wesentliche Baueinheiten ein Ventil 2 zum Steuern von Kraftstoff und ein nicht näher dargestelltes Düsenmodul, welches in an sich bekannter Weise aufgebaut ist.

Das Düsenmodul umfaßt einen in einem Düsenkörper geführten Ventilsteuerkolben, der mit einer Düsennadel, welche eine zu dem Brennraum der Brennkraftmaschine führende Öffnung des Kraftstoffeinspritzventiles 1 steuert, in Wirkverbindung steht oder mit dieser eine Baueinheit bildet. An die freie Stirnseite des Ventilsteuerkolbens grenzt ein sogenannter Ventilsteuerraum. Über das in dem Ventilsteuerraum herrschende Druckniveau wird die Lage des Ventilsteuerkolbens bzw. der Düsennadel eingestellt. Der Ventilsteuerraum steht hierzu über eine Hochdruckzuführleitung mit einem für mehrere Einspritzventile gemeinsam vorgesehenen Hochdruckspeicher, einem sogenannten Common-Rail, in Verbindung. Der in der Hochdruckzuführleitung geführte Kraftstoff kann dabei unter einem Druck von über 1,8 kbar stehen.

Darüber hinaus steht der Ventilsteuerraum über eine Ablaufdrossel mit dem Ventil 2 zum Steuern von Kraftstoff in Verbindung, über das ein Einspritzbeginn, eine Einspritzdauer und eine Einspritzmenge einstellbar ist.

Zum Ansteuern umfaßt das Ventil 2 eine piezoelektrische Aktor-Einheit 4, welche auf der dem Brennraum der Verbrennungsmaschine abgewandten Seite des Kraftstoffeinspritzventiles 1 angeordnet ist und zur Betätigung einer Ventilglied-Anordnung 5 dient. Die piezoelektrische Aktor-Einheit 4 bzw. deren piezoelektrische Keramik ist in bekannter Weise aus mehreren Schichten aufgebaut und stützt sich mit einem Ende an einer Wand eines Ventilkörpers 6 ab. Auf seiner der Ventilglied-Anordnung 5 zugewandten Seite steht die Keramik über einen Aktorkopf 7 mit einem ersten Kolben 8 der Ventilglied-Anordnung 5 in Wirkverbindung, wobei die piezoelektrische Aktor-Einheit und die Ventilglied-Anordnung 5 in axialer Richtung des Ventiles 2 hintereinander angeordnet sind.

Die Ventilglied-Anordnung 5 weist neben dem ersten Kolben 8 einen weiteren, ebenfalls in dem Ventilkörper 6 geführten zweiten Kolben 9 auf. Der erste Kolben 8 wird auch als Stellkolben oder erster Übersetzungskolben bezeichnet und der zweite Kolben 9 stellt den sogenannten Betätigungskolben oder zweiten Übersetzungskolben des Kraftstoffeinspritzventiles 1 dar, wobei der zweite Kolben 9 zur Betätigung eines Ventilschließgliedes 10 dient. Zwischen den Kolben 8, 9, von denen der erste Kolben 8 einen größeren Durchmesser als der zweite Kolben 9 aufweist, ist eine als hydraulische Übersetzung wirkende Hydraulikkammer 11 angeordnet, so daß eine axiale Auslenkung des ersten Kolbens 8 infolge einer Spannungsbeaufschlagung der piezoelektrischen Aktor-Einheit 4 über die Hydraulikkammer 11 auf den zweiten Kolben 9 übertragen wird, welcher einen um das Übersetzungsverhältnis der Kolbendurchmesser der beiden Kolben 8, 9 vergrößerten Hub macht.

Das Ventilschließglied 10 wirkt mit einem an dem Ventilkörper 6 ausgebildeten Ventilsitz 12 zusammen, der hier als ein Kugelsitz für das kugelförmig dargestellte Ventilschließglied 10 ausgestaltet ist. Die dargestellte kugelförmige Form des Ventilsitzes 12 und des Ventilschließgliedes 10 stellt lediglich eine vorzugsweise Ausgestaltung dar, da es selbstverständlich im Ermessen des Fachmannes liegt, beide Funktionsteile in einer hiervon abweichenden Ausführungsform, d.h. mit einer anderen geometrischen Form auszubilden. Darüber hinaus ist es denkbar, daß das Ventilschließglied gegebenenfalls mit zwei Ventilsitzen zusammenwirkt und dann ein sogenanntes Doppelsitzventil darstellt.

Bei unbetätigter, d.h. spannungsloser piezoelektrischer Aktor-Einheit 4 liegt das Ventilschließglied 10 an dem Ventilsitz 12 an und trennt einen Hochdruckbereich 13 von einem an den Ventilsitz 12 angrenzenden Systemdruckbereich 14. In dem Hochdruckbereich 13 können Betriebsdrücke von z. B. 1,8 kbar vorliegen, welche Systemdrücke des Systemdruckbereiches, die im allgemeinen zwischen 2 bar und 50 bar, vorzugsweise in einem Bereich zwischen 20 bar und 30 bar liegen, um ein Vielfaches übersteigen. Dieser Druckunterschied führt zu einem sicheren Verschließen des Ventilsitzes 12 durch das Ventilschließglied 10 bei nicht betätigter piezoelektrischer Aktor-Einheit 4.

Um das Ventilschließglied 10 auch bei fehlender Druckdifferenz und unbetätigter piezoelektrischer Aktor-Einheit 4 an dem Ventilsitz 12 zu halten, ist eine Feder 15 vorgesehen, welche das Ventilschließglied 10 gegen den Ventilsitz 12 drückt.

Eine sich niederdruckseitig an den Ventilsitz 12 anschließende Ventilkammer 16 enthält ein Druckspeichervolumen mit dem Systemdruck p_sys, der ca. 30 bar beträgt. In einem Bereich zwischen dem zweiten Kolben 9 und dem Ventilschließglied 10 ist ein Zwischenkolben 17 zur Betätigung des Ventilschließgliedes 10 angeordnet. Der Zwischenkolben 17 weist einen kleineren Durchmesser als der zweite Kolben 9 auf, wobei das dem Ventilschließglied 10 zugewandte Ende des Zwischenkolbens 17 in dem Systemdruckbereich 14 angeordnet ist und ein dem zweiten Kolben 9 zugewandtes Ende in einem Rücklaufbereich 18 angeordnet ist, dessen Druck kleiner als der Druck des Systemdruckbereiches 14 ist.

Der Zwischenkolben 17 ist in dem Ventilkörper 6 geführt, wobei eine Führung 25 des Zwischenkolbens mit einem derartigen Spiel ausgeführt ist, daß eine Druckdifferenz zwischen dem Systemdruckbereich 14 und dem Rücklaufbereich 18 erhalten bleibt. Das bedeutet, daß die Führung 25 mit einem engen Führungsspiel ausgestaltet sein muß, damit Leckverluste aus dem Systemdruckbereich 14 in Richtung des Rücklaufbereiches 18 gering sind.

Der Systemdruckbereich 14 erstreckt sich von der Ventilkammer 16 über die Leitung 19 bis hin zu einer weiteren Ventilkammer 20, welche auf ihrer der Ventilglied-Anordnung 5 zugewandten Seite durch den ersten Kolben 8 begrenzt wird. Des weiteren herrscht in der Hydraulikkammer 11 im wesentlichen der Systemdruck p_sys. Der Systemdruck p_sys des Systemdruckbereiches 14 wird durch ein mit der weiteren Ventilkammer 20 in Verbindung stehendes Druckhalteventil 21 begrenzt, wobei unzulässig hohe Drücke in dem Systemdruckbereich 14 durch ein ansprechendes Druckhalteventil 21 in Richtung des Rücklaufbereiches 18 abgebaut werden. Das heißt, für den Fall, daß der Systemdruck zu hoch ist, öffnet das Druckhalteventil 21 und es wird eine bestimmte Menge an Kraftstoff aus dem Systemdruckbereich 14 in den Rücklaufbereich 18 geleitet.

Nachfolgend wird eine sich an einen Einspritzvorgang anschließende Wiederbefüllung der Hydraulikkammer 11 beschrieben:

Im Fall einer nicht betätigten piezoelektrischen Aktor-Einheit 4 wird der erste Kolben 8 von einer Feder 22, welche sich an dem Ventilkörper 6 und einem Bund 23 des ersten Kolbens 8 abstützt, an die piezoelektrische Aktor-Einheit 4 gedrückt.

Aufgrund des nach einem Einspritzvorgang reduzierten Volumens der Hydraulikkammer 11 ist der zweite Kolben 9 in axialer Richtung derart weit in Richtung des ersten Kolbens 8 verschoben, daß zwischen dem Zwischenkolben 17 und dem Ventilschließglied 10 ein Spalt ausgebildet ist. Da dies für eine verzögerungsfreie Ansteuerung des Kraftstoffeinspritzventiles 1 eine unerwünschte Position der Ventilglied-Anordnung 5 darstellt, muß die Hydraulikkammer 11 derart befüllt werden, daß der Zwischenkolben 17 an dem Ventilschließglied 10 zum Anliegen kommt.

Die Befüllung der Hydraulikkammer 11 erfolgt aus dem Systemdruckbereich 14 in die Hydraulikkammer 11 derart, daß aufgrund des Systemdruckes p_sys Kraftstoff aus der weiteren Ventilkammer 20 über den Spalt zwischen dem ersten Kolben 8 und dem Ventilkörper 6 in die Hydraulikkammer 11 strömt. Eine Befüllung aus dem Rücklaufbereich 18 über den Führungsspalt zwischen dem zweiten Kolben 9 und dem Ventilkörper 6 findet aufgrund des geringen Druckes des Rücklaufbereiches, der in etwa 1 bar entspricht, nicht statt.

Der Zwischenkolben 17 ist mit einem geringeren Durchmesser als der zweite Kolben 9 ausgebildet, so daß aufgrund des Kolbendurchmesserverhältnisses zwischen dem Zwischenkolben 17 und dem zweiten Kolben 9 eine Verschiebung des zweiten Kolbens 9 und des Zwischenkolbens 17 in Richtung des Ventilschließgliedes 10 erfolgt.

Die auf der dem Zwischenkolben 17 abgewandten Seite des Ventilschließgliedes 10 angeordnete Feder 15, die das Ventilschließglied 10 selbst bei nicht vorliegendem Hochdruck bzw. Rail-Druck seitens des Hochdruckbereiches 13 an dem Ventilsitz 12 halten soll, ist so dimensioniert, daß sie bei senkrechter Einbaulage des Kraftstoffeinspritzventiles in einem Zylinderkopf die Gewichtskraft des Ventilschließgliedes 10, des Zwischenkolbens 17 und des zweiten Kolbens 9 aufbringt. Die Feder 15 kann somit sehr klein dimensioniert werden, wobei die von der Feder 15 aufzubringende Kraft in einem Bereich von unter 1 N liegen kann.

Der Zwischenkolben 17 ist im vorliegenden Ausführungsbeispiel als separates Bauteil gegenüber dem zweiten Kolben 9 ausgebildet, wobei es selbstverständlich im Ermessen des Fachmannes liegt, den zweiten Kolben und den Zwischenkolben einstückig auszuführen, so daß der zweite Kolben als Stufenkolben ausgebildet ist, der mit seinem einen geringeren Querschnitt aufweisenden Bereich an das Ventilschließglied heranreicht.

## Patentansprüche

1. Ventil (2) zum Steuern von Flüssigkeiten mit einer piezoelektrischen Aktor-Einheit (4) zur Betätigung einer Ventilglied-Anordnung (5), die mindestens einen in einem Ventilkörper (6) geführten ersten Kolben (8) und einen zweiten Kolben (9) aufweist, zwischen denen eine als hydraulische Übersetzung wirkende Hydraulikkammer (11) angeordnet ist, wobei über die Ventilglied-Anordnung (5) ein Ventilschließglied (10) betätigt wird, das mit einem am Ventilkörper (6) ausgebildeten Ventilsitz (12) zusammenwirkt und in Schließstellung einen Hochdruckbereich (13) von einem Systemdruckbereich (14) trennt, welcher über ein auf den Systemdruck (p_sys) eingestelltes Druckhalteventil (21) an einen niederdruckseitigen Rücklaufbereich (18) mit einem Druck Kleiner als der Druck das Systembereiches angeschlossen ist, wobei die Ventilglied-Anordnung (5) im Bereich zwischen dem zweiten Kolben (9) und dem Ventilschließglied (10) einen Zwischenkolben (17) umfasst, der einen kleineren Durchmesser als der zweite Kolben (9) aufweist, wobei ein dem Ventilschließglied zugewandtes Ende des Zwischenkolbens (17) sowie ein der piezoelektrischen Aktor-Einheit (4) zugewandtes Ende des ersten Kolbens (8) an den Systemdruckbereich (14) grenzt und ein Übergangsbereich zwischen dem zweiten Kolben (9) und dem Zwischenkolben (17) im niederdruckseitigen Rücklaufbereich (18) angeordnet ist,
**dadurch gekennzeichnet,**
**dass** der Zwischenkolben (17) in einer Führung (25) des Ventilkörpers (6) geführt ist, die den im Übergangsbereich zwischen zweitem Kolben (9) und Zwischenkolben (17) vorgesehenen niederdruckseitigen Rücklaufbereich (18) von einer sich systemdruckseitig an den Ventilsitz (12) anschließenden Ventilkammer (16) trennt, in der das dem Ventilschließglied (10) zugewandtes Ende des Zwischenkolbens (17) angeordnet ist.

2. Ventil nach Anspruch 1, **dadurch gekennzeichnet, dass** der zweite Kolben (9) und der Zwischenkolben (17) einstückig ausgeführt sind.

3. Ventil nach Anspruch 1, **dadurch gekennzeichnet, dass** der zweite Kolben (9) und der Zwischenkolben (17) als separate Bauteile ausgeführt sind.

4. Ventil nach einem der Ansprüche 1 bis 3, **dadurch gekennzeichnet, dass** die Führung (25) des Zwischenkolbens (17) mit einem derartigen Spiel ausgeführt ist, dass eine Druckdifferenz zwischen dem Systemdruckbereich (14) und dem Bereich (18) mit einem Druck kleiner als der Systemdruck (p_sys) erhalten bleibt.

5. Ventil nach einem der Ansprüche 1 bis 4, **gekennzeichnet durch** seine Verwendung als Bestandteil eines Kraftstoffeinspritzventils (1) für Brennkraftmaschinen, insbesondere eines Common-Rail-Injektors.

## Claims

1. Liquid control valve (2) with a piezoelectric actuator unit (4) for actuating a valve member arrangement (5) having at least one first piston (8) which is guided in a valve body (6) and a second piston (9), between which pistons is arranged a hydraulic chamber (11) as a hydraulic transformer, a valve closing member (10) being actuated by means of the valve member arrangement (5), which valve closing member (10) interacts with a valve seat (12) formed on the valve body (6) and, in a closed position, separates a high pressure region (13) from a system pressure region (14) which is connected, by means of a pressure holding valve (21) set to the system pressure (p_sys), to a low-pressure-side return region (18) which is at a lower pressure than the system region, the valve , member arrangement (5) comprising an intermediate piston (17) in the region between the second piston (9) and the valve closing body (10), which intermediate piston (17) has a smaller diameter than the second piston (9), the system pressure region (14) being adjoined by an end, which faces towards the valve closing member, of the intermediate piston (17) and an end, which faces towards the piezoelectric actuator unit (4), of the first piston (8), and a transition region between the second piston (9) and the intermediate piston (17) being arranged in the low-pressure-side return region (18),
**characterized**
**in that** the intermediate piston (17) is guided in a guide (25) of the valve body (6), which guide (25) separates the low-pressure-side return region (18), which is provided in the transition region between the second piston (9) and the intermediate piston (17), from a valve chamber (16) which adjoins the valve seat (12) at the system pressure side, in which valve chamber (16) is arranged that end of the intermediate piston (17) which faces towards the valve closing member (10).

2. Valve according to Claim 1, **characterized in that** the second piston (9) and the intermediate piston (17) are embodied in one piece.

3. Valve according to Claim 1, **characterized in that** the second piston (9) and the intermediate piston (17) are embodied as separate components.

4. Valve according to one of Claims 1 to 3, **characterized in that** the guide (25) of the intermediate piston (17) is embodied to have a degree of play such that a pressure difference is maintained between the system pressure region (14) and the region (18) which is at a lower pressure than the system pressure (p_sys).

5. Valve according to one of Claims 1 to 4, **characterized by** its use as a component part of a fuel injection valve (1) for internal combustion engines, in particular of a common rail injector.

## Revendications

1. Soupape (2) de commande de liquides avec une unité d'actionneur piézoélectrique (4) pour l'actionnement d'un dispositif d'organe de soupape (5), qui présente au moins un premier piston (8) guidé dans un corps de soupape (6) et un deuxième piston (9), entre lesquels est disposée une chambre hydraulique (11) agissant en tant qu'amplificateur hydraulique, le dispositif d'organe de soupape (5) actionnant un obturateur de soupape (10) qui coopère avec un siège de soupape (12) formé sur le corps de soupape (6) et qui en position de fermeture, sépare une zone haute pression (13), d'une zone de pression du système (14) raccordée par une soupape de maintien de la pression (21) réglée sur la pression du système (p_sys), à une zone de retour basse pression (18) ayant une pression inférieure à celle de la zone du système, le dispositif de soupape (5) comprenant dans la zone entre le deuxième piston (9) et l'obturateur de soupape (10), un piston intermédiaire (17) de diamètre plus petit que le deuxième piston (9), et dont une extrémité du piston intermédiaire (17) tournée vers l'obturateur de soupape ainsi qu'une extrémité du premier piston (8) tournée vers l'unité d'actionneur piézoélectrique (4) sont adjacentes à la zone de pression du système (14), avec une zone transitoire entre le deuxième piston (9) et le piston intermédiaire (17) dans la zone de retour basse pression (18),
**caractérisée en ce que**
le piston intermédiaire (17) est guidé dans un guidage (25) du corps de soupape (6) qui sépare la zone de retour basse pression (18), prévue dans la zone transitoire entre le deuxième piston (9) et le piston intermédiaire (17), d'une chambre de soupape (16) se raccordant côté pression du système au siège de soupape (12), et dans laquelle est disposée l'extrémité du piston intermédiaire (17) tournée vers l'obturateur de soupape (10) .

2. Soupape selon la revendication 1,
**caractérisée en ce que**
le deuxième piston (9) et le piston intermédiaire (17) sont réalisés en une seule pièce.

3. Soupape selon la revendication 1,
**caractérisée en ce que**
le deuxième piston (9) et le piston intermédiaire (17) sont réalisés comme des composants séparés.

4. Soupape selon l'une des revendications 1 à 3,
**caractérisée en ce que**
le guidage (25) du piston intermédiaire (17) est réalisé avec un jeu qui maintient une pression différentielle entre la zone de pression du système (14) et la zone de pression inférieure à la pression du système (p_sys).

5. Soupape selon l'une des revendications 1 à 4,
**caractérisée par**
son utilisation en tant que composant d'un injecteur de carburant (1) pour moteurs à combustion interne, en particulier d'un injecteur pour rampe commune("Common Rail").
